# EUROPÄISCHE PATENTSCHRIFT

(11) **EP 0 879 260 B1**
(45) Veröffentlichungstag und Bekanntmachung des Hinweises auf die Patenterteilung: **28.03.2001**
(21) Anmeldenummer: 97902239.9
(22) Anmeldetag: 28.01.1997
(51) Int. Cl.: C08G 73/02

(54) **VERFAHREN ZUR HERSTELLUNG VON VERNETZTEN POLYMEREN**
PROCESS FOR THE PREPARATION OF CROSS-LINKED POLYMERS
PROCEDE DE PRODUCTION DE POLYMERES RETICULES

(30) Priorität: 06.02.1996 DE 19604176
(43) Veröffentlichungstag der Anmeldung: 25.11.1998
(73) Patentinhaber: Cognis Deutschland GmbH, 40589 Düsseldorf (DE)
(72) Erfinder: LLOSAS BIGORRA, Joaquim, E-08203 Sabadell (ES)
(86) Internationale Anmeldenummer: EP9700362
(87) Internationale Veröffentlichungsnummer: WO9729147

(56) Entgegenhaltungen:
- EP-A- 0 031 899
- EP-A- 0 320 121
- US-A- 3 891 589

## Beschreibung

### Gebiet der Erfindung

Die Erfindung betrifft ein neues zweistufiges Verfahren zur Herstellung von vernetzten Polymeren für die Papierbehandlung.

### Stand der Technik

Unter dem Oberbegriff "Papier" werden ca. 3000 verschiedene Sorten und Artikel verstanden, die sich in ihren Anwendungsgebieten und ihrer Beschaffenheit zum Teil erheblich unterscheiden können. Zu ihrer Herstellung werden wäßrige, etwa 1 bis 5 Gew.-%ige Aufschlämmungen von Cellulosefasern in dünnen Schichten auf Bänder aufgebracht, auf denen sie bei ganz erheblichen Laufgeschwindigkeiten und unter Anwendung von Wärme und mechanischem Druck bis zu einem Feststoffgehalt von etwa 40 Gew.-% entwässert werden. Während das noch feuchte Rohpapier in weiteren Schritten getrocknet wird, kehrt das abgepreßte Wasser in den Kreislauf zurück.

In modernen Papiermühlen wird aus ökonomischen und ökologischen Gründen Wert darauf gelegt, den Wasserkreislauf weitgehend geschlossen zu halten. Hierzu ist es natürlich erforderlich, daß das Prozeßwasser möglichst unbelastet von Abfallstoffen ist bzw. sich nur solche Abfallstoffe anreichern, deren Weiterverwendung unproblematisch ist. Ein besonderes Augenmerk liegt dabei auf dem sogenannten AOX-Gehalt des Prozeßwassers, d.h. dem Gehalt an unerwünschten Halogenverbindungen.

Im Rahmen der Papierherstellung ist der Zusatz einer Vielzahl von Additiven jedoch unum-gänglich. Hierzu gehören beispielsweise Füllstoffe, Entschäumer, Farbstoffe, Retentionsmittel sowie Hilfsstoffe, die die mechanische Zugbelastbarkeit des Papiers verbessern und - je nach Anwendungsbereich - als "dry" oder "wet strength resins" bezeichnet werden. Da sich die Additive im Laufe der Zeit zusammen mit Cellulosefasern im Prozeßwasser anreichern, besteht ein erhebliches Bedürfnis nach Produkten, die aus ökologischer Sicht möglichst unbedenklich sind.

Zu den Additiven, die in diesem Zusammenhang kritisch gesehen werden können, zählen insbesondere die wet strength resins, bei denen es sich um vernetzte Polyaminoamide handelt. Zur Herstellung dieser Stoffe, die auch unter dem Handelsnamen Fibrabones® bekannt sind, geht man von Polyamino-amiden aus, deren Ketten unter Einsatz von Epichlorhydrin über Stickstoffatome vernetzt werden. Aus dem umfangreichen Stand der Technik sei in diesem Zusammenhang auf die US-Patentschriften **US 5,116,887, US 5,120,773, US 5,239,047** und **US 5,350,796** (Henkel Corp.) sowie auf die Europäische Patentanmeldung **EP-A1 0 553 575** (Hercules) verwiesen.

Es hat sich dabei erwiesen, daß zwischen dem Vernetzungsgrad der wet strength resins und der Verbesserung der Zugbelastbarkeit des damit behandelten Papiers ein direkter Zusammenhang besteht. Aus dieser Sicht ist es empfehlenswert, möglichst alle für eine Verknüpfung zur Verfügung stehenden Stickstoffgruppen im Polyaminoamid über Epichlorhydrineinheiten zu vemetzen. Andererseits führt die Umsetzung jeder Stickstoffgruppe mit Epichlorhydrin zur Abspaltung von Chlorwasserstoff, der als Addukt gebunden bleibt oder mit dem Epichlorhydrin abreagiert, und somit zu einer AOX-Belastung des Produktes, was aus den oben geschilderten Gründen außerordentlich unerwünscht ist. Demzufolge versucht man bislang die beiden gegenläufigen Parameter - Vernetzungsgrad und AOX-Belastung - in der Balance zu halten. Tatsächlich aber sind die Ergebnisse unbefriedigend, da in vielen Fällen weder die anwendungstechnischen Eigenschaften vollauf zufriedenstellend sind noch eine ausreichende ökologische Verträglichkeit der Produkte erreicht werden kann.

Die Aufgabe der Erfindung hat somit darin bestanden, ein Verfahren zur Herstellung von wet strength resins zur Verfügung zu stellen, das frei von den geschilderten Nachteilen ist.

### Beschreibung der Erfindung

Gegenstand der Erfindung ist ein Verfahren zur Herstellung von vernetzten Polymeren, bei dem man Polyaminoamide
(a) zunächst bei 10 bis 35 und vorzugsweise 15 bis 25°C mit einer Menge von 5 bis 40 und vorzugsweise 10 bis 30 Mol-% - bezogen auf den für die Vernetzung zur Verfügung stehenden Stickstoff - Epichlorhydrin umsetzt, und
(b) das Zwischenprodukt auf einen pH-Wert im Bereich von 8 bis 11 und vorzugsweise 9 bis 10 einstellt und bei einer Temperatur im Bereich von 20 bis 45 und vorzugsweise 25 bis 40°C mit einer weiteren Menge Epichlorhydrin vernetzt, so daß das molare Einsatzverhältnis in Summe 90 bis 125 und vorzugsweise 95 bis 110 und vorzugsweise 100 bis 105 Mol-% - bezogen auf den für die Vernetzung zur Verfügung stehenden Stickstoff - beträgt.

Überraschenderweise wurde gefunden, daß die zweistufige Durchführung des Verfahrens bei niedrigen Temperaturen und zwischenzeitlicher Nachregulierung des pH-Wertes im Vergleich zu bekannten Verfahren des Stands der Technik zu einer signifikanten Absenkung des AOX-Wertes im Abwasser führt, während die Zugfestigkeit der mit den vernetzten Polymeren behandelten Papiere mindestens gleich bleibt.

### Dicarbonsäuren

Bei den im Sinne der Erfindung als Ausgangsstoffe in Betracht kommenden Polyamino-amiden handelt es sich um handelsübliche Polykondensationsprodukte, die sich von Dicarbonsäuren der Formel **(I)** ableiten,

**HOOC-[A]-COOH** **(I)**

in der A für eine lineare oder verzweigte, aliphatische, cycloaliphatische und/oder aromatische, gegebenenfalls hydroxysubstituierte Alkylengruppe mit 1 bis 52 und vorzugsweise 1 bis 10 Kohlenstoffatomen steht. Typische Beispiele für Dicarbonsäuren, von denen sich die Polyaminoamide ableiten können sind beispielsweise Bernsteinsäure, Azelainsäure, Dodecandisäure, Phthalsäure und technische Dimer- bzw. Trimerfettsäuren. Vorzugsweise handelt es sich um Polyaminoamide auf Basis von Adipinsäure.

### Polyamine

Bei den im Sinne der Erfindung als Ausgangsstoffe in Betracht kommenden Polyaminoamiden handelt es sich um handelsübliche Polykondensationsprodukte, die sich ferner von Polyaminen der Formel **(II)** ableiten,

**H**_{**2**}**N-(B)-NH-[(C)NH]**_{**z**}**H** **(II)**

in der B und C unabhängig voneinander für lineare oder verzweigte, gegebenenfalls hydroxysubstituierte Alkylengruppen mit 1 bis 4 Kohlenstoffatomen und z für 0 oder Zahlen von 1 bis 10 steht.

Typische Beispiele sind Polyamine der Formel **(II)**, in denen B und C für Ethylengruppen und z für 2 oder 3 steht. Demzufolge sind die bevorzugt einzusetzenden Polyamine Diethylentriamin und Triethylentetramin. In Summe bevorzugt sind Polyaminoamide auf Basis von Adipinsäure und Diethylentriamin.

### Vernetzung

Die Vernetzung der Polyaminoamide kann in wäßriger oder alkoholischer Lösung erfolgen. Dabei empfiehlt es sich, das Epichlorhydrin in beiden Stufen portionsweise zuzugeben und die Reaktion wegen der erheblichen Exothermie bei möglichst niedrigen Temperaturen nicht oberhalb von 40°C durchzuführen. Die Menge des einzusetzenden Epichlorhydrins entspricht üblicherweise der für eine Vernetzung zur Verfügung stehenden molaren Menge an Stickstoffgruppen. Es empfiehlt sich daher aus praktischen Gründen, vor der Vernetzung die Aminzahl des Polymers zu bestimmen. Nach Zugabe des ersten Teils des Epichlorhydrins wird der pH-Wert des Reaktionsansatzes durch Zugabe von wäßriger Alkalibasen nachgeregelt und auf 9 bis 11 eingestellt. Im Anschluß an die Epichlorhydrinzugabe in der zweiten Verfahrensstufe wird das Produkt üblicherweise über einen Zeitraum von 12 bis 48 und vorzugsweise 24 bis 36 h gerührt. Gegen Ende der Reaktionszeit empfiehlt es sich femer, die Temperatur bis auf etwa 40°C anzuheben und die Vernetzung durch Zugabe von Mineralsäure und Einstellung eines pH-Wertes im Bereich von 2 bis 4 abzubrechen, sobald die Viskosität einen kritischen Bereich von etwa 500 mPa*s (gemessen nach der Brookfield-Methode, 40°C, Spindel 1) erreicht hat.

### Gewerbliche Anwendbarkeit

Die nach dem erfindungsgemäßen Verfahren erhältlichen vernetzten Kationpolymere verleihen Papier eine verbesserte Zugbelastbarkeit bei niedriger AOX-Belastung. Produkte des Stands der Technik weisen demgegenüber entweder eine vergleichbare Verbesserung der Zugbelastbarkeit bei höherer AOX-Belastung oder umgekehrt eine schlechtere Zugbelastbarkeit bei vergleichbarer AOX-Belastung auf. Die nach dem erfindungsgemäßen Verfahren erhältlichen vernetzten Polymere eignen sich als wet strength resins zur Papierherstellung.

### Beispiele

### I. Herstellbeispiele

### Beispiel 1:

In einer 1-I-Rührapparatur wurden 450 g eines Polyaminoamids auf Basis Adipinsäure und Diethylentriamin (Aminzahl 101 mg KOH/g entsprechend 0,81 Äquivalenten Stickstoff, Verkaufsprodukt der Henkel Corp., Gulph Mills/US) in 105 ml Wasser suspendiert und portionsweise mit 25 Mol-% - bezogen auf die Aminzahl - Epichlorhydrin versetzt, so daß die Temperatur nicht über 20°C abstieg. Anschließend wurde der Ansatz über einen Zeitraum von 4 h bei 17°C gerührt und schließlich durch Zuga-be von wäßriger 25 Gew.-%iger Natriumhydroxidlösung auf einen pH-Wert von 9,5 eingestellt. Danach wurde die Reaktionsmischung mit weiteren 80 Mol-% Epichlorhydrin versetzt und zunächst 2 h bei 20°C und dann 21 h bei 30°C gerührt. Anschließend wurde die Mischung weiter gerührt, bis eine ausreichende Viskosität von etwa 500 mPa*s erreicht wurde. Schließlich wurde die Reaktion durch Zugabe von wäßriger Salzsäure und Einstellen auf einen pH-Wert von 2,5 abgebrochen. Das resultierende vernetzte Polymer wurde durch Zugabe von Wasser auf einen Trockenrückstand von 13 Gew.-% eingestellt. Die anwendungstechnischen Ergebnisse sind in Tabelle 1 zusammengefaßt.

### Beispiel 2

Beispiel 1 wurde wiederholt. in der zweiten Stufe jedoch anstelle von 0,80 nur 0,70 Mol-% Epichlorhydrin eingesetzt. Die Ergebnisse sind in Tabelle 1 zusammengefaßt.

### Vergleichsbeispiel V1

Beispiel 1 wurde wiederholt, jedoch 105 Mol-% Epichlorhydrin in einer Stufe eingesetzt und 34 h bei 30°C gerührt. Die Ergebnisse sind in Tabelle 1 zusammengefaßt.

### Vergleichsbeispiel V2

Vergleichsbeispiel V1 wurde wiederholt, jedoch 125 Mol-% Epichlorhydrin eingesetzt. Die Ergebnisse sind in Tabelle 1 zusammengefaßt.

### II. Anwendungstechnische Beispiele

Für die anwendungstechnische Beurteilung wurde zunächst eine wäßrige Aufschlämmung von 1200 g Cellulosefasern (Gewichtsverhältnis kurze/lange Fasern = 70:30) in 6 I Wasser herge- stellt. Jeweils 250 ml dieser Pasten wurden mit 5 Gew.-% der Testlösungen - bezogen auf Trockensubstanz - versetzt, 2 min gerührt und ausgestrichen. Das noch feuchte Rohpapier wurde schließlich über einen Zeitraum von 30 min bei 105°C getrocknet. Papierstreifen einer Breite von 15 mm (Gewicht der Muster ca. 2 g, Papiergewicht ca. 55 g/m²) wurden auf ihre Zugfestigkeit untersucht. Die Ergebnisse sind in Tabelle 1 zusammengefaßt; angegeben ist die Kraft bis zum Reißen des Papiers als Mittel von 5 Messungen:

**Tabelle 1**

| **Anwendungstechnische Ergebnisse** | | | | |
|---|---|---|---|---|
| **Bsp**. | **Anzahl der Verfahrensstufen** | **Epichlorhydrin bezogen auf Aminzahl [Mol-%]** | **Zugfestigkeit** **N** | **AOX im Abwasser** **ppm** |
| 1 | 2 | 105 | 11,11 | 1340 |
| 2 | 2 | 95 | 7,36 | 905 |
| V1 | 1 | 105 | 8,90 | 2400 |
| V2 | 1 | 125 | 12,12 | 9762 |

## Patentansprüche

1. Verfahren zur Herstellung von vernetzten Polymeren, bei dem man Polyaminoamide
(a) zunächst bei 10 bis 35°C mit einer Menge von 5 bis 10 Mol-% - bezogen auf den für die Vernetzung zur Verfügung stehenden Stickstoff - Epichlorhydrin umsetzt, und
(b) das Zwischenprodukt auf einen pH-Wert im Bereich von 8 bis 11 einstellt und bei einer Temperatur im Bereich von 20 bis 45°C mit einer weiteren Menge Epichlorhydrin vemetzt, so daß das molare Einsatzverhältnis in Summe 90 bis 125 Mol-% - bezogen auf den für die Vernetzung zur Verfügung stehenden Stickstoff - beträgt.

2. Verfahren nach Anspruch 1, **dadurch gekennzeichnet**, daß man Polyaminoamide einsetzt, die sich von Dicarbonsäuren der Formel **(I)** ableiten,
**HOOC-[A]-COOH** **(I)**
in der A für eine lineare oder verzweigte, aliphatische, cycloaliphatische und/oder aromatische, gegebenenfalls hydroxysubstituierte Alkylengruppe mit 1 bis 52 Kohlenstoffatomen steht.

3. Verfahren nach den Ansprüchen 1 und 2, **dadurch gekennzeichnet**, daß man Polyaminoamide einsetzt, die sich von Polyaminen der Formel **(II)** ableiten,
**H**_{**2**}**N-(B)-NH-[(C)NH]**_{**z**}**H** **(II)**
in der B und C unabhängig voneinander für lineare oder verzweigte, gegebenenfalls hydroxysubstituierte Alkylengruppen mit 1 bis 4 Kohlenstoffatomen und z für 0 oder Zahlen von 1 bis 10 steht.

## Claims

1. A process for the production of crosslinked polymers in which polyaminoamides
(a) are reacted at 10 to 35°C with a quantity of 5 to 10 mol-% - based on the nitrogen available for the crosslinking - of epichlorohydrin and
(b) the intermediate product is adjusted to a pH of 8 to 11 and crosslinked with more epichlorohydrin at a temperature of 20 to 45°C so that the molar ratio is in all 90 to 125 mol-%, based on the nitrogen available for the crosslinking.

2. A process as claimed in claim 1, characterized in that polyaminoamides derived from dicarboxylic acids corresponding to formula (I):
HOOC-[A]-COOH (I)
in which A is a linear or branched, aliphatic, cycloaliphatic and/or aromatic, optionally hydroxy-substituted alkylene group containing 1 to 52 carbon atoms,
are used.

3. A process as claimed in claims 1 and 2, characterized in that polyaminoamides derived from polyamines corresponding to formula (II):
H₂N-(B)-NH-[(C)NH]_{z}H (II)
in which B and C independently of one another represent linear or branched, optionally hydroxy-substituted alkylene groups containing 1 to 4 carbon atoms and z is a number of 1 to 10,
are used.

## Revendications

1. Procédé de préparation de polymères réticulés dans lequel,
a) on convertit des polyaminoamides en premier lieu à 10 à 35°C avec une quantité de 5 à 10 molaire d'épichlorhydrine, rapporté à l'azote disponible pour la réticulation, et
b) on ajuste le produit intermédiaire à une valeur de pH dans la zone de 8 à 11 et on réticule avec une quantité supplémentaire d'épichlorhydrine à une température dans la zone de 20 à 45°C, de sorte que le rapport d'utilisation molaire s'élève globalement de 90 à 125 % molaire, rapporté à l'azote disponible pour la réticulation.

2. Procédé selon la revendication 1,
caractérisé en ce qu'
on utilise des polyaminoamides qui dérivent d'acides dicarboxyliques de formule (I),
HOOC-[A]-COOH (I)
dans laquelle A représente un groupe alkylène linéaire ou ramifié aliphatique, cycloaliphatique et/ou aromatique, le cas échéant substitué par un hydroxy, ayant de 1 à 52 atomes de carbone.

3. Procédé selon les revendications 1 et 2,
caractérisé en ce qu'
on utilise des polyaminoamides qui dérivent de polyamines de formule (II)
H₂N-(B)-NH-[(C)NH]_{Z}H (II)
dans laquelle B et C indépendamment l'un de l'autre, représentent des groupes alkylène linéaires ou ramifiés, éventuellement substitués par un hydroxy, ayant de 1 à 4 atomes de carbone et z représente 0 ou des nombres allant de 1 à 10.
